(19) Europäisches Patentamt
European Patent Office
Office européen des brevets

(11) EP 2 985 318 B1

(12) EUROPÄISCHE PATENTSCHRIFT

(45) Veröffentlichungstag und Bekanntmachung des Hinweises auf die Patenterteilung:
**01.03.2017 Patentblatt 2017/09**

(51) Int Cl.:
***C08L 83/06*** *(2006.01)* ***C07F 7/18*** *(2006.01)*

(21) Anmeldenummer: **15401083.9**

(22) Anmeldetag: **04.08.2015**

(54) **RADIKALISCH HÄRTBARE KUNSTHARZMASSE MIT SILOXANOLIGOMERZUSÄTZEN**

RADICALLY CURABLE SYNTHETIC RESIN COMPOSITION WITH OLIGOMERIC SILOXANE ADDITIVES.

MASSE DE RÉSINE SYNTHÉTIQUE DURCISSABLE PAR VOIE RADICALAIRE AVEC DES ADDITIFS DE SILOXANES OLIGOMÉRIQUES.

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.08.2014 DE 102014111455**
**14.08.2014 DE 102014111651**

(43) Veröffentlichungstag der Anmeldung:
**17.02.2016 Patentblatt 2016/07**

(73) Patentinhaber: **fischerwerke GmbH & Co. KG**
**72178 Waldachtal (DE)**

(72) Erfinder:
- **Grün, Jürgen**
**79268 Bötzingen (DE)**
- **Vogel, Martin**
**79286 Glottertal (DE)**
- **Schlenk, Christian**
**79211 Denzlingen (DE)**
- **Weinelt, Christian**
**79312 Emmendingen (DE)**

(56) Entgegenhaltungen:
**WO-A1-2011/072789 US-A1- 2002 115 811**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine härtbare (Kunstharz-)Masse, insbesondere ein Befestigungskunstmörtelsystem zum Einmörteln von Verankerungsmitteln in Löcher oder Spalten, beinhaltend (nach Start und unter Umsetzung mit einem Härter) härtende Reaktivharze auf Basis radikalisch härtbarer (olefinische Bindungen aufweisender) Reaktionskunstharze, deren Verwendung als Formmassen, Beschichtungsmassen, Dichtungsmassen oder Klebstoffe, insbesondere die Verwendung der härtbaren Masse zum Einmörteln von Verankerungsmitteln in Löcher oder Spalten, und/oder damit einhergehende Erfindungsgegenstände wie nachstehend angegeben.

Eine ganze Reihe von (z.B. Injektions-)Befestigungskunstmörtelsystemen auf Basis verschiedenster polymerbildender Komponenten, wie Epoxide, Vinylester und dergleichen, sind bekannt, die, mal als Ein-, oft als Zwei- oder Mehrkomponentensysteme ausgebildet, dem Einmörteln von Verankerungsmitteln, wie Bolzen oder dergleichen, in Löchern, wie Bohrlöchern, oder Spalten, jeweils in festen Untergründen, wie z.B. Mauerwerk oder Beton, dienen. An den Verankerungsmitteln können dann weitere Bauteile befestigt werden. Das Einmörteln der Verankerungsmittel beruht dabei zum einen auf Klebeeffekten im Sinne eines Stoffschlusses zwischen dem Befestigungskunstmörtel und einem Verankerungselement und/oder der benetzten Fläche des Loches oder Spaltes, zum anderen auf Formschluss, wie beispielsweise Hinterschneidungen durch Umgeben mittels des Befestigungskunstmörtels von vorspringenden oder einbuchtenden Abschnitten des Verankerungselements und/oder des Lochs oder Spaltes durch die ausgehärtete Mörtelmasse.

Ein Beispiel für besonders gut geeignete Befestigungskunstmörtelsysteme sind solche auf der Basis von ungesättigten Reaktionsharzen und geeigneten Härtern.

FIS V 360 S® (fischerwerke GmbH & Co. KG, Waldachtal, Deutschland) ist ein sehr erfolgreiches, auf dem Markt etabliertes Beispiel für ein zweikomponentiges Befestigungskunstmörtelsystem zum Einmörteln von Verankerungselementen auf der Basis eines Dimethacrylates in Komponente A und von Dibenzoylperoxid als einem solchen Härter in einer räumlich getrennten Komponente B, daneben jeweils weiteren Bestandteilen in jeder Komponente.

Derartige Befestigungskunstmörtelsysteme zeigen sehr gute Eigenschaften zur Befestigung auch in feuchten und verschmutzten Löchern, doch erhöhen insbesondere neue Vorschriften die Anforderungen auch unter Bedingungen relativ großer Nässe und Restverschmutzung, wie beispielsweise analog in der Leitlinie von der "European Organisation for Technical Approvals" (EOTA) (2001): ETAG N°001 Ausgabe November 2006, Leitlinie für die europäische technische Zulassung für Metalldübel zur Verankerung im Beton, Teil 5: Verbunddübel, Februar 2008, unter 5.1.2.1 (b) beschriebenen Bedingungen: Dort werden Versuche mit enger Abstützung im ungerissenen Beton C 20/25 beschrieben, unter Verwendung u.a. elektrischer Hammerbohrmaschinen. Der Einfluss der Bohrloch-Reinigungstechnik im feuchten Untergrund wird hierbei (für die nachfolgend beschriebene Erfindung) beispielsweise wie folgt geprüft, wobei der Beton im Bereich der Verankerung mit Wasser gesättigt sein muss, wenn das Loch gebohrt, gereinigt und das Verankerungselement eingesetzt wird:

1. Ein Loch mit einem Durchmesser von etwa 0.5 x $d_0$ ($d_0$ = zu prüfender Bohrlochdurchmesser) wird mit der zu prüfenden Verankerungstiefe im Betonuntergrund gebohrt.
2. Das Loch wird mit Wasser gefüllt und bleibt 8 Tage lang gefüllt, bis Wasser in einer Entfernung von 1,5 d bis 2 d von der Bohrlochachse aus in den Beton eingedrungen ist.
3. Das Wasser wird aus dem Bohrloch entfernt.
4. Das endgültige Loch wird mit dem zu prüfenden Durchmesser $d_0$ aufgebohrt.

Dann wird das Bohrloch mit der vom Hersteller gelieferten Handpumpe und Bürste gereinigt, wobei folgendes Vorgehen gewählt wird: 1 x Ausblasen mit dem Handausbläser / x Ausbürsten mit der Handbürste / 1 x Ausblasen mit dem Handausbläser. Anschließend werden (beispielsweise im Versuch in den Beispielen für die nachfolgende Erfindung mittels einer 2-Komponenten-Kartusche mit Statikmischer) der Befestigungskunstmörtel und ein Verankerungselement M12 eingebracht.

Nach der vorgeschriebenen, temperaturabhängigen Mindestaushärtezeit werden dann Adhäsionsversagensversuche mit enger Abstützung, wie Sie in der europäische technischen Zulassung für Metalldübel zur Verankerung im Beton, Teil 5: Verbunddübel Ausgabe Februar 2008 unter 5.0 Bild 2 ausgeführt sind, durchgeführt, um die Adhäsionsversagenskraft der eingemörtelten Verankerungselemente zu ermitteln.

Die bekannten radikalisch härtenden ungesättigten Reaktionsharzsysteme bzw. Befestigungskunstmörtelsysteme zeigen hierbei bereits sehr gute Adhäsionsversagenslasten, doch stellen die neuen Testsysteme und Verfahren weitere Herausforderungen, so dass eine Aufgabe darin besteht, auch unter diesen - schwierigen - Bedingungen noch bessere Eigenschaften, wie insbesondere weiter erhöhte Adhäsionsversagenslasten, zu erzielen.

Die WO 2011/072789 zeigt, dass (monomere) Silane diese Aufgabe hervorragend lösen. Von Nachteil ist hier allerdings, dass durch Hydrolyse- und Kondensationsreaktionen kleine Moleküle freigesetzt werden, die zum einen als störende Weichmacher im Duroplasten, zum anderen und noch wesentlich störender als Emission freigesetzt werden

können. Bei Einsatz dieser Befestigungskunstmörtelsysteme kommt es daher zu einer VOC-Belastung (Belastung mit "Flüchtigen Kohlenwasserstoffen" = Volatile Organic Compounds) der Raumluft. Dies ist bei Bauprodukten besonders im Innenbereich nicht gewünscht.

Überraschend wurde nun gefunden, dass der Zusatz oligomerer Siloxane, die beispielsweise zur Teilnahme an der Polymerisation mit einer härtbaren Masse, insbesondere einem Befestigungskunstmörtelsystem, jeweils auf Basis radikalisch härtender ungesättigter Reaktionsharze befähigte reaktive Gruppen und Si-gebundene hydrolysierbare Gruppen aufweisen, derartige bekannte radikalisch härtende Befestigungskunstmörtelsysteme nicht nur vorteilhaft beeinflusst, insbesondere höhere Adhäsionsversagenslasten ermöglichen kann, sondern vor allem gleichzeitig auch eine Verringerung der VOC-Belastung ermöglicht. Daneben können weitere Vorteile aufgrund erhöhter Funktionalität, die zu einer höheren Vernetzungsdichte und damit höhere Wärmeformbeständigkeiten ermöglichen kann, gefunden werden.

Die Erfindung betrifft daher in einer ersten Verkörperung eine zwei- oder mehrkomponentige härtbare (Kunstharz-)Masse, insbesondere ein Befestigungskunstmörtelsystem, auf der Basis von einem und/oder mehreren radikalisch härtenden ungesättigten Reaktionskunstharzen, insbesondere zur Verwendung als Formmassen, Beschichtungsmassen, Dichtungsmassen oder Klebstoffe, insbesondere zum Einmörteln von Verankerungsmitteln in Löcher oder Spalten, welche(s) dadurch gekennzeichnet ist, dass sie bzw. es (bereits vor dem Beginn der radikalischen Härtungsreaktion) neben dem und/oder den Reaktionsharz(en) ein oder mehrere mindestens eine Si-gebundene hydrolysierbare Gruppe und mindestens einen olefinischen Rest beinhaltende oligomere Siloxane und räumlich getrennt (z.B. in einer zweiten Komponente) einen Härter beinhaltet, und daneben gegebenenfalls weitere übliche Zusätze vorhanden sein können.

In einer weiteren Verkörperung (= Ausführungsform) betrifft die Erfindung die Verwendung einer solchen härtbaren Masse, insbesondere eines solchen zwei- oder mehrkomponentigen Befestigungskunstmörtelsystems, als Formmassen, Beschichtungsmassen, Dichtungsmassen oder Klebstoffe, insbesondere zum Befestigen von Verankerungsmitteln in Löchern oder Spalten.

Auch entsprechende Verfahren und Methoden zum Herstellen von Formen (z.B. durch Gießen in Formen), zur Verwendung als Beschichtungen durch Auftragen auf Substrate, zur Abdichtung durch Auftragen als Dichtungsmasse auf und/oder in Fugen oder Substrate), oder zum Verkleben von Objekten, insbesondere Methoden und Verfahren zum Einmörteln von Verankerungselementen in Löchern oder Spalten, bei denen eine wie vor- und nachstehend beschrieben definierte härtbare Masse, insbesondere ein wie vor- und nachstehend definiertes zwei- oder mehrkomponentiges Befestigungskunstmörtelsystem, verwendet wird, bilden eine Ausführungsform der Erfindung - wobei ein erfindungsgemäßes Befestigungskunstmörtelsystem und ein Verankerungsmittel nacheinander, insbesondere zuerst das zwei- oder mehrkomponentige Befestigungskunstmörtelsystem, dann das Verankerungsmittel, und/oder gleichzeitig in ein Loch oder einen Spalt in einem Substrat eingebracht werden und das Befestigungskunstmörtelsystem (durch Mischung des Härters mit der oder den das radikalisch härtende Reaktionsharz enthaltenden Komponente(n)) zum Aushärten gebracht wird.

Möglicherweise bewirken die oligomeren Siloxanzusätze, ohne durch diesen Erklärungsversuch abschließend gebunden sein zu wollen, einen besseren Kontakt zur benetzten Substratoberfläche im Loch oder Spalt, sei es im Form- und/oder im Stoffschluss.

Erstaunlich ist, dass auch hohe Anteile der oligomeren Siloxane von der härtbaren Masse bzw. dem Befestigungskunstmörtelsystem nicht nur gut toleriert werden, sondern sogar zu besonders effektiven härtbaren Massen und insbesondere zu erfindungsgemäßen Befestigungskunstmörtelsystemen führen können. Möglicherweise ist auch eine verbesserte interne Kohäsion (der beim Einmörteln von Verankerungssystemen eher dickschichtigen resultierenden ausgehärteten Befestigungskunstmörtel) und/oder eine verbesserte Adhäsion, aufgrund der gegenüber (an Substrat und Verankerungsmittel befindlicher) Oberflächen-OH-Gruppen reaktiven hydrolysierbaren Gruppen beinhaltenden oligomeren Siloxane, gegeben, die ebenfalls zu den hohen Werten für Adhäsionsversagen und zu den hohen Verbundspannungen beitragen dürften. Die verbesserte interne Kohäsion ist möglicherweise auf die (raum)vernetzte harte Si-O Struktur und der zusätzlichen olefinischen Funktionalitätserhöhung der oligomeren Siloxane zurückzuführen, welche dadurch möglicherweise besonders engmaschig vernetzte Polymere mit harten Si-O-Kernen bilden. Dies ist ein besonders überraschender Aspekt der vorliegenden Erfindung.

Überraschenderweise zeigen sich auch besonders gute Eigenschaften der erfindungsgemäßen härtbaren Massen und insbesondere der erfindungsgemäßen Befestigungskunstmörtelsysteme hinsichtlich der Leistungsfähigkeit in der Zugzone, also im gerissenen Beton. Auch andere mechanische Eigenschaften können positiv beeinflusst werden, wie beispielsweise die Maximalbruchdehnung und das Zugmodul.

Völlig überraschend findet sich auch, beispielsweise bei Zwei-Kammer-Patronen mit den Komponenten des erfindungsgemäßen Befestigungskunstmörtelsystems, eine verbesserte Lagerstabilität.

Ein weiterer Vorteil ist, dass durch die Vorkondensation zu den oligomeren Siloxanen gegenüber monomeren Silanen beim Aushärten unter Hydrolyse der hydrolysierbaren Gruppen geringere Mengen an flüchtigen organischen Verbindungen (VOCs) freigesetzt werden, wenn die Herstellung der Oligomeren separat und unter (z.B. destillativer) Entfernung der aus den abgespaltenen hydrolysierbaren Resten freigesetzten flüchtigen organischen Verbindungen erfolgt.

Daneben lassen sich mit den oligomeren Siloxanen gut geeignete Viskositäten einstellen.

Bei den ausgehärteten Massen handelt es sich so bevorzugt um hochfeste, wenig flexible Festkörper mit einem Zugmodul > 0,5 GPa, bevorzugt > 1 GPa, einer Zugfestigkeit von > 1 MPa, bevorzugt > 5 MPa und einer Bruchdehnung < 10 %, bevorzugt < 5 %, insbesondere < 2 % (gemessen nach DIN EN ISO 527) und einer Druckfestigkeit von > 5 MPa, bevorzugt > 10 MPa, insbesondere > 20 MPa (gemessen nach DIN EN ISO 604).

Schließlich kann auch eine gegenüber entsprechenden Befestigungskunstmörteln ohne Silan- bzw. Siloxanzusatz erhöhte Leistungsfähigkeit im gerissenen Beton gefunden werden; geprüft nach den Verfahren gemäß den Leitlinien von der European Organisation for Technical Approvals (EOTA) (2001): ETAG N°001 Ausgabe November 2006, Leitlinie für die europäische technische Zulassung für Metalldübel zur Verankerung im Beton, Teil 5: Verbunddübel, Februar 2008.

Allgemein verwendbare Methoden sind auch in den Beispielen im Detail beschrieben.

Die nachfolgenden Definitionen dienen der Klärung bestimmter Begriffe oder Symbole und der Beschreibung besonderer Ausführungsformen der Erfindung, wobei in den vor- und nachstehend genannten Ausführungsformen der Erfindung einzelne, mehrere oder alle Begriffe oder Symbole durch speziellere Definitionen ersetzt werden können, was jeweils besondere Ausführungsformen der Erfindung darstellt.

Wo Gewichtsangaben in Prozent (Gew.-%) gemacht werden, beziehen sich diese, wenn nichts anderes gesagt ist, auf die Gesamtmasse der Reaktanden und Zusätze aller (im fertig formulierten Zustand flüssigen und pastösen) Bestandteile des Befestigungskunstmörtelsystems, also ohne Verpackung, d.h. die Masse der gesamten zugehörigen Reaktionsharzformulierungsbestandteile.

Bei den oligomeren Siloxanen handelt es sich um mit olefinischen Resten funktionalisierte Siloxanoligomere, die durchschnittlich je Oligomermolekül mehr als einen, beispielweise mindestens zwei oder mehr olefinische Reste sowie mindestens eine, vorzugsweise mindestens zwei oder mehr hydrolysierbare an Silicium gebundene Gruppen aufweisen. Sie weisen Si-O-vernetzte Strukturelemente auf, die mindestens eine Struktur ausgewählt aus kettenförmigen, cyclischen, vernetzten und gegebenenfalls raumvernetzten Strukturen ausbilden, und beinhalten vorzugsweise mindestens eine Struktur in idealisierter (statistisch gemittelter) Form der allgemeinen Formel (I),

$$(R^1O)[(R^1O)_{\{2-(a+e)\}}(R^2)_aSi(A)_eO]_b\text{-}[Si(Y)_2O]_c\text{-}[Si(B)_e(R^4)_d(OR^3)_{\{2-(d+e\}}O]_fR^3 \qquad \text{(I)}$$

wobei die Strukturelemente sich von Alkoxysilanen ableiten und
A und B jeweils unabhängig voneinander einen olefinischen Rest bedeuten,
Y für $OR^5$ und/oder $R^5$ steht oder in vernetzten und gegebenenfalls raumvernetzten Strukturen unabhängig voneinander $OR^5$, $R^5$ oder $O_{0,5}$ bedeutet, vorzugsweise ist Y gleich $OR^5$;
die Reste $R^1$, $R^2$, $R^3$, $R^4$ und $R^5$ jeweils für sich und untereinander unabhängig voneinander, einen unsubstituierten oder substituierten - gegebenenfalls Heteroatome aufweisenden - linearen, verzweigten oder cyclischen Alkylrest mit 1 bis 20 Kohlenstoffatomen bedeuten;
und a, b, c, d, e und f, bezogen auf eine Struktureinheit, unabhängig voneinander ganze Zahlen bedeuten, wobei
a gleich unabhängig voneinander 0 oder 1;
b gleich 1 oder größer;
c gleich 0 oder größer;
d gleich unabhängig voneinander 0 oder 1;
e gleich unabhängig voneinander 1 oder 2;
und f gleich 0 oder größer ist,
mit der Maßgabe, dass b + c + f mindestens 2 oder größer ist.

Die Grenzen ergeben sich durch die Vierbindigkeit von Silicium.

Dabei müssen bei Vorliegen von mehr als einem Strukturelement (A1) gleich $-[(R^1O)_{\{2-(a+e)\}}(R^2)_aSi(A)_eO]_b$- (b > 1) und/oder (A2) gleich $-[Si(B)_e(R^4)_d(OR^3)_{\{2-(d+e\}}O]_f$- (f > 1) und/oder (A3) gleich $-[Si(Y)_2O]_c$- (c > 1) die genannten Strukturelemente - nicht wie in Formel (I) dargestellt - jeweils aufeinanderfolgend angeordnet sein, sondern können auch statistisch verteilt sein (z.B. rein illustrierend und nicht limitierend A1-A1-A3-A1-A3--A2-A1-A3-A3).

Wo im Rahmen der vorliegenden Offenbarung von Heteroatomen die Rede ist, sind dies vorzugsweise ein bis drei unabhängig aus S, O und N ausgewählte Heteroatome. Besonders bevorzugt beinhalten die erfindungsgemäß eingesetzten oligomeren Siloxane ein oder mehrere Verbindungen mit mindestens einer Struktur in idealisierter Form der allgemeinen Formel (IA),

$$(R^1O)[(R^1O)_{(2-(a+e)}(R^2)_aSi(A)_eO]_b\text{-}R^1 \qquad \text{(IA)}$$

wobei in einer weiter bevorzugten Ausführungsform alle Reste $R^1$ je Molekül identisch sein können;
und wobei auch Mischungen von zwei oder mehr Strukturen der Formel IA mit unterschiedlichen Resten $R^1$ möglich sind;
worin $R^1$, $R^2$, a und e wie oben für Strukturen der Formel I definiert sind und im Mittel b größer oder gleich 2,000 ist.

Ferner können die erfindungsgemäß verwendeten oligomeren Siloxane auch zusätzlich Trialkylsilangruppen aufweisen wie Trimethylsilan- oder Triethylsilangruppen, beispielsweise durch Herstellung unter Verwendung von Alkoxytrialkylsilan, was ermöglicht, den Oligomerisierungsgrad einzustellen: Die Alkoxytrialkylsilane können, beispielsweise zu einem bestimmten Zeitpunkt zugesetzt, einen Kettenabbruch im unten näher beschriebenen Verfahren bewirken.

Ein olefinischer Rest ist vorzugsweise ein nicht hydrolysierbarer olefinischer Rest, insbesondere in Form einer linearen, ein- oder mehrfach verzweigten, oder zyklischen - ferner gegebenenfalls Heteroatome aufweisenden - Gruppe mit 2 bis 20, insbesondere 2 bis 10 Kohlenstoffatomen und mit mindestens einer isolierten Doppelbindung, bevorzugt ein Vinyl-, Allyl-, oder ein Acryloyloxy-alkylrest oder ein Methacryloyloxy-alkylrest, insbesondere mit jeweils bis zu insgesamt zehn Kohlenstoffatomen, insbesondere ein (Meth)acryloyloxy-$C_1$-$C_7$-alkylrest, insbesondere 3-(Meth)acryloyloxypropyl oder 3-(Meth)acryloyloxymethyl.

In Ergänzung zu den oligomeren Siloxanen können die erfindungsgemäßen Befestigungskunstmörtelsysteme (beispielsweise zur Einstellung einer geeigneten Viskosität) auch monomere Silanzusätze als (mindestens zum Teil) reaktive Verdünner beinhalten. Die monomeren Silane können beispielsweise aus der Gruppe, die insbesondere aus (Meth)acryloyl-oxypropyltrialkoxysilanen, wie 3-(Meth)acryloyl-oxypropyltrimethoxysilan und 3-(Meth)acryloyl-oxypropyltriethoxysilan und/oder Alkenylalkoxysilanen wie Vinyltrimethoxysilan oder Vinyltriethoxysilan, und/oder Tetraalkoxysilan, wie Tetraethoxysilan, Tetramethoxysilan oder Tetrapropoxysilan oder ferner 3-Glycidyloxypropyltrialkoxysilanen, wie 3-Glycidyloxypropyltrimethoxysilan oder 3-Glycidyloxypropyltriethoxysilan oder Alkoxypolysilikat, wie Ethyl- oder Propylpolysilikat; besteht; oder Gemischen von zwei oder mehr davon, ausgewählt sein und können auch nicht umgesetzte Edukte sein.

Die Siloxane (insbesondere die oligomeren erfindungsgemäßen Siloxane) können beispielsweise, bezogen auf das gesamte Befestigungskunstmörtelsystem, in einem Gewichtsanteil von bis (höchstens) 50 Gew.-%, insbesondere von 0,001 bis 50 Gew.-%, wie von 0,01 bis 30 Gew.-%, vorzugsweise von 0,1 oder mehr Gew.-%, wie von 0,5 bis 20 oder bis 15 Gew.-%, von 1 oder mehr Gew.-%, wie von 2 bis 20 oder bis 10 Gew.-%, von 3 oder mehr Gew.-%, z.B. von 3 bis 20 oder bis 6 Gew.-%, vorgesehen sein.

"Auf Basis" bedeutet beispielsweise, dass die erfindungsgemäßen Befestigungskunstmörtelsysteme neben den bisher genannten Bestandteile auch weitere übliche Bestandteile (z.B. Füllstoffe, Additive oder andere oben oder unten genannte Bestandteile) beinhalten können.

"Beinhalten" oder "umfassen" bedeutet, dass neben den genannten Bestandteilen oder Merkmalen noch andere vorhanden sein können, steht also für eine nicht abschließende Aufzählung, im Gegensatz zu "enthalten", das eine abschließende Aufzählung der bei seiner Verwendung aufgezählten Bestandteile oder Merkmale bedeutet.

Wo das Attribut "ferner" erwähnt wird, bedeutet dies, dass Merkmale ohne dieses Attribut stärker bevorzugt sein können.

(Meth)acryl steht für Acryl, Methacryl oder Acryl und Methacryl (als Gemisch).

(M)ethoxy steht für Methoxy, Ethoxy oder Methoxy und Ethoxy (als Gemisch).

Unter Si-gebundenen hydrolysierbaren Gruppen sind insbesondere solche Gruppen zu verstehen, die ausgewählt sind aus der Gruppe, die aus Halogen, wie Chloro, Acyloxy, Aryloxy, Aralkyloxy (= Arylalkyloxy) und insbesondere Alkoxy besteht. Besonders bevorzugt sind Methoxy oder Ethoxy.

Das oder die erfindungsgemäßen oligomeren Siloxane haben vorzugsweise mittlere Molekulargewichte von 10000 oder kleiner, 5000 oder kleiner, oder insbesondere 2000 oder kleiner, 1000 oder kleiner oder 500 oder kleiner.

Acyl steht innerhalb dieser Offenbarung stets für einen Rest einer Carbonsäure oder einer Sulfonsäure, beispielsweise einen Aryl-, Alkyl- oder Aralkyl-carbonsäure- oder -sulfonsäure-Rest, wie $C_1$-$C_7$-Alkanoyl, z.B. Acetyl oder Propionyl, Aroyl (Aryl-C(=O)-), wie Benzoyl, oder dergleichen.

Alkyl (auch in Alk(yl)oxy) steht innerhalb dieser Offenbarung stets für insbesondere einen unverzweigten oder ein- oder mehrfach verzweigten - gegebenenfalls ferner Heteroatome aufweisenden - Alkylrest mit beispielsweise 1 bis 20, vorzugsweise 1 bis 10 Kohlenstoffatomen, beispielsweise mit 1 bis 4 Kohlenstoffatomen, wie z.B. Methyl, Ethyl, n-Propyl, Isopropyl, n-Butyl, sek.-Butyl, Isobutyl, tert-Butyl,

Alkenyl steht innerhalb dieser Offenbarung stets für insbesondere einen unverzweigten oder ein- oder mehrfach verzweigten - gegebenenfalls ferner substituierten und/oder Heteroatome aufweisenden - Alkylrest, der eine oder mehrere Unsättigungen aufweist, mit beispielsweise 1 bis 20, vorzugsweise 1 bis 10 Kohlenstoffatomen, beispielsweise mit 1 bis 4 Kohlenstoffatomen, wie z.B. Vinyl oder Allyl oder (Meth)-acryl.

Aromatisch (z.B. Aryl) (auch in Aryloxy oder Arylalkyl oder dergleichen) bedeutet, dass die entsprechenden Verbindungen aromatische (Aryl-) Reste mit 6 bis 18 Kohlenstoffresten enthalten, wie Phenyl, Naphthyl oder Fluorenylen, die unsubstituiert oder (beispielsweise mit ein oder mehreren, z.B. bis zu drei, $C_1$-$C_7$-Alkylreste, wie ein oder mehreren Methylgruppen) substituiert sein können. Bevorzugt als Aryl ist Phenyl, Naphthyl oder Toluyl.

Cyclisches Alkyl oder Cycloalkyl kann vorzugsweise 1 bis 10 Ringkohlenstoffatome haben und (beispielsweise

bis zu 6) Kohlenstoffatome (in Form von Methylen- oder Methylgruppen) auch außerhalb des jeweiligen Rings beinhalten und ist beispielsweise Cyclopropyl, Cyclopropylmethyl oder -ethyl, Cyclobutyl, Cyclobutylmethyl oder -ethyl, Cyclopentyl, Cyclopentylmethyl oder -ethyl, Cyclohexyl, Cyclohexylmethyl oder -ethyl, Cycloheptyl oder Cycloheptylmethyl oder -ethyl.

Unter radikalisch härtenden ungesättigten Reaktionskunstharzen sind in erster Linie solche zu verstehen, die als radikalisch aushärtende (was "(z.B. vor Härterzugabe) aushärtbar einschließt) Bestandteile organische Verbindungen mit ungesättigten (z.B. olefinischen) Resten beinhalten oder insbesondere daraus bestehen, insbesondere solche, die härtbare Ester mit ungesättigten Carbonsäureresten umfassen; z.B. insbesondere (Meth)Acrylat-oder (Meth)-Acrylamid-Monomere, wie Acrylsäure und/oder Methacrylsäure oder vorzugsweise deren Ester (als (Meth)acrylate bezeichnet) oder Amide, insbesondere (Meth)Acrylate wie Mono-, Di-, Tri- oder Poly (meth)acrylate (einschließlich Hydroxypropyl(meth)acrylat, Hydroxyethyl(meth)acrylat, Ethylenglykoldi(meth)acrylat, Butandioldi(meth)acrylat, Hexandioldimethacrylat oder (vorzugsweise jeweils propoxyliertem oder insbesondere ethoxyliertem) aromatischem Diol-, wie Bisphenol-A-, Bisphenol-F- oder Novolak-(insbesondere di-) (meth)-acrylat), Epoxy(meth)acrylate (insbesondere in Form von Umsetzungsprodukten von Di- oder Polyepoxiden, z.B. Bisphenol-A-, Bisphenol-F- oder Novolak-di- und/ oder -polyglycidylethern, mit ungesättigten Carbonsäuren, z.B. $C_2$-$C_7$-Alkencarbonsäuren, wie insbesondere (Meth)acrylsäure), Urethan- und/oder Harnstoff(meth)acrylate (was, wie dem Fachmann bekannt, auch vorverlängerte und/oder oligomere Urethan- und/oder Harnstoff(meth)acrylate umfasst), und/oder ungesättigte Polyesterharze, oder dergleichen; oder ein Gemisch von zwei oder mehr dieser härtbaren ungesättigten organischen Bestandteilen.

Beispiele für in besonderen Ausführungsformen der Erfindung vorhandene bzw. verwendete Epoxy(meth)acrylate sind solche der Formel

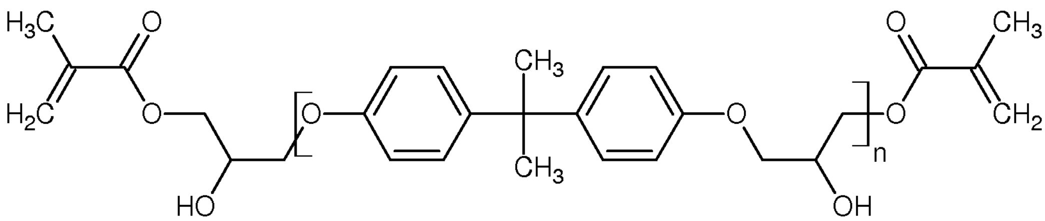

worin n für eine Zahl größer oder gleich 1 steht (wenn Gemische verschiedener Moleküle mit unterschiedlichen n-Werten vorliegen und durch die Formel repräsentiert werden, sind auch nicht-ganzzahlige Zahlen als Mittelwert möglich).

Beispiele für in besonderen Ausführungsformen der Erfindung nützliche propoxylierte oder insbesondere ethoxylierte aromatische Diol-, wie Bisphenol-A-, Bisphenol-F- oder Novolak-(insbesondere di-)(meth)acrylate sind solche der Formel

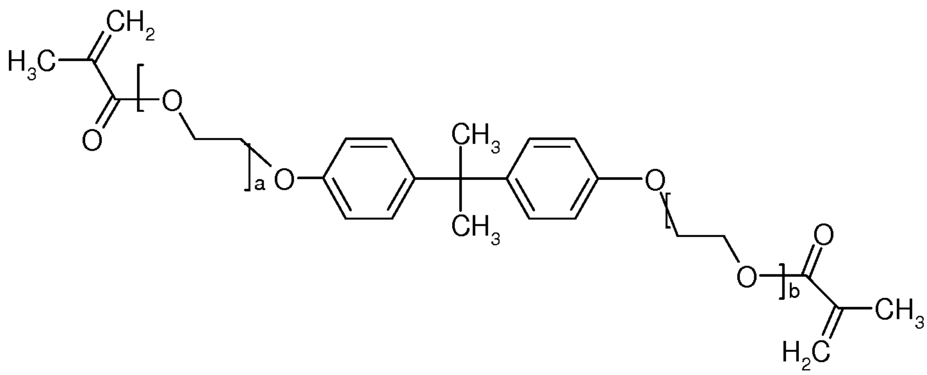

worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind (wenn Gemische verschiedener Moleküle mit unterschiedlichen (a und b)-Werten vorliegen und durch die Formel repräsentiert werden, sind auch nicht-ganzzahlige Zahlen als Mittelwert möglich).

Beispiele für in besonderen Ausführungsformen der Erfindung vorhandene bzw. verwendete Urethan(meth)acrylate sind solche, die einerseits aus der Umsetzung eines vorverlängerten monomeren Di- oder Polyisocyanats und/oder andererseits aus der Umsetzung eines polymeren Di- oder Polyisocyanats (z.B.: PMDI, MDI und/oder MDI) mit Hydroxyethyl- oder Hydroxypropyl(meth)acrylat resultieren. Die Art und Weise zur Durchführung von Vorverlängerungsreaktionen und die Vielzahl der Vorverlängerungsreaktionsmöglichkeiten sind dem Fachmann bekannt und werden hier nicht explizit beschrieben. Es sei hier beispielhaft auf die Anmeldungen EP 0508183 A1, EP 0432087 A1 und die noch nicht offengelegte Anmeldung vom 14.02.2014 mit der Anmeldungsnummer DE 10 2014 101 861.3 verwiesen.

Das radikalisch härtbare ungesättigte Reaktionskunstharz (bzw. die Gesamtmenge seiner Bestandteile) liegt beispielsweise in einem Gewichtsanteil von 1 bis 99,5 %, wie etwa von 10 bis 90, z.B. 15 bis 80 %, vor.

Wichtige Beispiele für mögliche weitere Bestandteile sind (beispielsweise aminische) Beschleuniger, Inhibitoren, reaktive Verdünner, Thixotropiermittel, Füllstoffe und weitere Additive.

Als aminische Beschleuniger kommen solche mit hinreichend hoher Aktivität in Frage, wie insbesondere (vorzugsweise tertiäre, insbesondere hydroxyalkylaminogruppensubstituierte) aromatische Amine ausgewählt aus der Gruppe, die aus epoxyalkylierten Anilinen, Toluidinen oder Xylidinen, wie z.B. ethoxyliertem Toluidin, Anilin oder Xylidin, beispielsweise N,N-bis(hydroxymethyl- oder hydroxyethyl)-toluidinen oder-xylidinen, wie N,N-bis(hydroxypropyl- oder hydroxyethyl)-p-toluidin, N,N-Bis(hydroxyethyl)-xylidin und ganz besonders entsprechenden höher alkoxylierten technischen Produkten, ausgewählt sind. Ein oder mehrere derartige Beschleuniger sind möglich. Die Beschleuniger haben, vorzugsweise einen Anteil (Konzentration) von 0,005 bis 10, insbesondere von 0,1 bis 5 Gew.-%.

Als Inhibitoren können beispielsweise nichtphenolische (anaerobe) und/oder phenolische Inhibitoren zugesetzt werden.

Als phenolische Inhibitoren (die oft als bereits zugemischter Bestandteil von käuflichen radikalisch härtenden Reaktionsharzen vorgesehen sind, aber ferner auch fehlen können) kommen (nicht-alkylierte oder alkylierte) Hydrochinone, wie Hydrochinon, Mono-, Di- oder Trimethylhydrochinon, (nichtalkylierte oder alkylierte) Phenole, wie 4,4'-Methylen-bis(2,6-di-tert-butylphenol), 1,3,5-Trimethyl-2,4,6-tris(3,5-di-tert-butyl-4-hydroxybenzyl)-benzol, (nichtalkylierte oder alkylierte) Brenzcatechine wie tert.-Butylbrenzcatechin, 3,5-Di-tert-butyl-1,2-benzoldiol oder 4-tert.-Butyl-1,2-benzoldiol, oder insbesondere 4-Methoxyphenol, oder Gemische von zwei oder mehr davon, in Frage. Diese haben, bezogen auf die Reaktionsharzformulierung, vorzugsweise einen Anteil von bis zu 1 Gew.-%, insbesondere zwischen 0,0001 und 0,5 Gew.-%, z.B. zwischen 0,01 und 0,1 Gew.-%.

Als nicht-phenolische oder anaerobe (d.h. im Gegensatz zu den phenolischen Inhibitoren auch ohne Sauerstoff wirksame) Inhibitoren (welche insbesondere die Aushärtezeiten kaum beeinflussen) kommen vorzugsweise Phenothiazin oder organische Nitroxylradikale in Betracht. Als organische Nitroxylradikale können beispielsweise solche zugesetzt sein, wie sie in der DE 199 56 509, die hier insbesondere bezüglich der darin genannten Verbindungen durch Bezugnahme inkorporiert wird, beschrieben sind, insbesondere 1-oxyl-2,2,6,6-tetramethylpiperidin-4-ol ("4-OH-TEMPO"). Der Gewichtsanteil der nicht-phenolischen Inhibitoren liegt vorzugsweise, bezogen auf die Reaktionsharzformulierung, im Bereich von 0,1 ppm bis 2 Gew.-%, vorzugsweise im Bereich von 1 ppm bis 1 Gew.-%.

Als Thixotropiermittel können übliche thixotropieverursachende Rheologiehilfsmittel verwendet werden, wie pyrogene Kieselsäure. Sie können z.B. in einem Gewichtsanteil von 0,01 bis 50 Gew.-%, beispielsweise von 1 bis 20 Gew.-%, zugesetzt werden.

Als Füllstoffe finden übliche Füllstoffe, insbesondere Zemente (z.B. Portlandzemente oder Tonerdeschmelzzemente), Kreiden, Sand, Quarzsand, Quarzmehl oder dergleichen, die als Pulver, in körniger Form oder in Form von Formkörpern zugesetzt sein können, Verwendung, oder andere, wie beispielsweise in WO 02/079341 und WO 02/079293 genannt (die hier diesbezüglich durch Bezugnahme aufgenommen werden), oder Gemische davon, wobei die Füllstoffe ferner oder insbesondere auch silanisiert sein können, beispielsweise als methacrylsilanbehandeltes Quarzmehl, wie Silbond MST® der Fa. Quarzwerke GmbH, als methacrylsilanbehandelte Kieselerde, wie Aktisil MAM® von Hoffmann Mineral, oder methacryloxypropyltrimethoxysilan-behandelte pyrogene Kieselsäure, wie Aerosil R 711® von Evonik. Die Füllstoffe können in einer oder in mehreren Komponenten eines erfindungsgemäßen Mehrkomponentenkits, beispielsweise einer oder beiden Komponenten eines entsprechenden Zweikomponentenkits, vorhanden sein; der Anteil an Füllstoffen beträgt vorzugsweise 0 bis 90 Gew.-%, beispielsweise 10 bis 90 Gew.-% (wobei auch beim Einbringen von Verankerungselementen zerstörtes Hüllmaterial (z.B. zersplittertes Glas oder zersplitterter Kunststoff), beispielsweise Scherben aus Patronen, mit als Füllstoff gerechnet werden kann, vorzugsweise wird). Zusätzlich oder alternativ können hydraulisch härtbare Füllstoffe, wie Gips (z.B. Anhydrit), Branntkalk oder Zement (z.B. Tonerd- oder Portlandzement), Wassergläser oder aktive Aluminiumhydroxide, oder zwei oder mehr davon, zugesetzt werden.

Auch weitere Additive können zugesetzt oder beinhaltet sein, wie Weichmacher, nicht reaktive Verdünnungsmittel, Flexibilisatoren, Stabilisatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon. (z.B. Rest-) Wassergehalte sind hier ebenfalls nicht ausgeschlossen. Auch können weitere Additive während der Lagerung hinzutreten, wie z.B. Gase, oder insbesondere Stoffe und/oder Stoffgemische im gasförmigen Aggregatzustand. Derartige weitere Zusätze können vorzugsweise insgesamt in Gewichtsanteilen von insgesamt 0 bis 90 %, beispielsweise von 0 bis 40 Gew.-%, zugesetzt sein.

Als "reaktive Verdünner" zu bevorzugten radikalisch härtenden ungesättigten Reaktionskunstharzen/Vinylestern können zusätzlich auch andere härtbare ungesättigte, wie olefinische, Verbindungen, beispielsweise ausgewählt aus Mono-, Di-, Tri- oder Poly(meth)acrylaten, wie Hydroxyalkyl(meth)acrylate, wie Hydroxypropylmethacrylat, sonstige (Meth)acrylsäureester, wie (ohne dass diese Aufzählung abschließend sein soll) Acetacetoxyalkyl-(meth)acrylat, (Meth)acrylsäuremethylester, 1,4-Butandioldi(meth)acrylat, 1,2-Ethandioldi(meth)acrylat, Diethylglykoldi(meth)acrylat,

Trimethylolpropantri(meth)acrylat, oder Polyethylenglykoldi(meth)acrylat; Styrole, wie Styrol, α-Methylstyrol, Vinyltoluol, tert.-Butylstyrol und/oder Divinylbenzol, oder Gemische von zwei oder mehr davon, als mit dem radikalisch härtenden ungesättigten Reaktionsharz parallel aushärtende Bestandteile vorgesehen sein, beispielsweise in einem Gewichtsanteil von 0,1 bis 90 Gew.-%, z.B. zwischen 0,5 und 75 Gew.-% oder zwischen 1 und 40 Gew.-%.

Der Härter beinhaltet mindestens ein Peroxid als eigentlichen Initiator. Der Begriff (radikalischer) "Härter" bedeutet dabei vorzugsweise vor- und nachstehend reine Initiatoren oder phlegmatisierte Initiatoren mit oder ohne Füllstoffzusatz und/oder weitere Zusätze, wie Wasser, Verdickungsmittel und/oder weitere Zusatzstoffe, wie Farbstoffe, Additive und dergleichen, mit anderen Worten, die komplette Härterkomponente. Zur Phlegmatisierung können übliche Zusätze, wie Gips, Kreide, pyrogene Kieselsäure, Phthalate, Chlorparaffin oder dergleichen, zugesetzt sein. Daneben können auch noch Füllstoffe und/oder (insbesondere zur Herstellung einer Paste oder Emulsion) Lösungsmittel, insbesondere Wasser, Verdickungsmittel, Füllstoffe (wie z.B. oben genannt) und weitere der oben genannten Zusätze zugesetzt sein, wobei Wasser als Reaktionspartner für die Hydrolyse der hydrolysierbare Gruppen beinhaltenden Silane und/oder Siloxane dienen kann. Der Anteil aller Zusätze kann beispielsweise bei einem Gewichtsanteil von insgesamt 0,1 bis 70 Gew.-%, z.B. von 1 bis 40 Gew.-%, liegen.

Bezogen auf die Härterkomponente liegt der Anteil des Initiators in einer möglichen bevorzugten Ausführungsform der Erfindung bei 1 bis 90 Gew.-%, insbesondere bei 5 bis 30 Gew.-%.

Als Initiator für die Härtung der im erfindungsgemäßen Befestigungskunstmörtelsystem enthaltenen Reaktionsharzformulierungen finden im Falle der radikalischen Polymerisation beispielsweise radikalbildende Peroxide, z.B. organische Peroxide, wie Diacylperoxide, z.B. Dibenzoylperoxid, Ketonperoxide, wie Methylethylketonperoxid oder Cyclohexanonperoxid, oder Alkylperester, wie tert-Butylperbenzoat, anorganische Peroxide, wie Persulfate oder Perborate, sowie Mischungen davon Verwendung.

Der Anteil des Härters an einem erfindungsgemäßen Befestigungskunstmörtelsystem liegt dabei vorzugsweise, bezogen auf die Masse aller Reaktanden und Zusätze ohne Verpackung, in einem Bereich von 1 bis 60 Gew.-%, z.B. 2 bis 50 Gew.-%, wobei der Anteil an Peroxid, ebenfalls bezogen auf die Masse des gesamten zugehörigen Befestigungskunstmörtelsystems (100 %), insbesondere bei 0,1 oder mehr Gew.-%, vorzugsweise bei 1,5 bis 10 Gew.-%, liegt. In einer besonderen Ausführungsform liegt der Peroxidgehalt < 1 % bezogen auf den Härter, in einer weiteren Möglichkeit liegt der Peroxidgehalt < 1 % bezogen auf alle Komponenten.

Alternativ kann für die Härtung der erfindungsgemäßen Befestigungskunstmörtelsysteme ein Härtersystem vewendet werden, welches die Bestandteile:

a) mindestens einen Aktivator in Form eines Metallsalzes
b) als Radikalkettenstarter mindestens eine Thiol- und/oder Thiolester-Gruppen beinhaltende Verbindung,

beinhaltet. Durch die Kombination bzw. das Mischen der beiden Bestandteile können Radikale gebildet werden, welche anstelle von bisher üblichen Radikalbildnern (z.B. Peroxiden) eine Polymerisation von nichtaromatischen Doppelbindungen, z.B. olefinischen Doppelbindungen, beispielsweise Acrylaten oder Methacrylaten, auslösen können.
Es sei hier auf die Patentanmeldung DE 10 2013 114 061.0 vom 16.12.2013 verwiesen, die hier diesbezüglich durch Bezugnahme aufgenommen wird.

Besonders bevorzugt und neu gegenüber der Patentanmeldung DE 10 2013 114 061.0 ist, dass es sich bei dem Bestandteil b (Radikalkettenstarter) auch um ein oligomeres Mercaptosiloxan handeln kann. Die oligomeren Mercaptosiloxane weisen ebenfalls Si-O-vernetzte Strukturelemente auf, die mindestens eine Struktur ausgewählt aus kettenförmigen, cyclischen, vernetzten und gegebenenfalls raumvernetzten Strukturen ausbilden, und beinhalten vorzugsweise mindestens eine Struktur in idealisierter (statistisch gemittelter) Form der allgemeinen Formel (V):

$$(R^1O)[(R^1O)_{\{2-(a+e)\}}(R^2)_aSi(M)_eO]_b-[Si(Y)_2O]_c-[Si(N)_e(R^4)_d(OR^3)_{\{2-(d+e\}}O]_fR^3 \quad (V)$$

wobei die Strukturelemente sich von Alkoxysilanen ableiten und
M und N jeweils unabhängig voneinander eine Mercaptogruppe beinhaltendes vorzugsweise $C_1$-$C_7$-Alkyl bedeuten, und $R^1$, $R^2$, $R^3$, $R^4$, $R^5$, Y, und a, b, c, d, e und f die unter Formel (I) definierten Bedeutungen mit den beschriebenen Maßgaben haben.

Insbesondere bevorzugt beinhalten die oligomeren Mercaptosiloxane mindestens eine Struktur in idealisierter Form der allgemeinen Formel (VIII):

$$(R^1O)[(R^1O)_{(2-e)}(R^2)_aSi(M)_eO]_b-R^1 \quad (VIII)$$

wobei die Strukturelemente sich von Alkoxysilanen ableiten und
M eine Mercaptogruppe beinhaltendes vorzugsweise $C_1$-$C_7$-Alkyl bedeutet, und
wobei in einer weiter bevorzugten Ausführungsform alle Reste $R^1$ je Molekül identisch sein können;

und wobei auch Mischungen von zwei oder mehr Strukturen der Formel VIII mit unterschiedlichen Resten $R^1$ möglich sind worin $R^1$, $R^2$, a und e wie oben für Strukturen der Formel I definiert sind und im Mittel b > 1,000, z.B. 1,1 oder größer ist (da hier auch Monomere mit umfasst sein können).

Besonders bevorzugt sind oligomere Mercaptosiloxane, die ebenfalls nach dem unten beschriebenen Verfahren aus Ausgangsstoffen der ebenfalls vor- und nachstehend definierten Formeln VI und VII und ggf. IV hergestellt sind, wobei als Ausgangsstoffe der Formeln VI

$$(R^1O)_{\{4-(a+e)\}}(R^2)_aSi(M)_e \qquad (VI)$$

und VII

$$(R^1O)_{(4-e)}Si(M)_e \qquad (VII)$$

folgende eingesetzt werden: 3-Mercaptopropyltrimethoxysilan, 3-Mercaptopropyltriethoxysilan.

Unter einem Loch oder Spalt ist ein solches Loch oder ein solcher Spalt zu verstehen, das oder der in einem festen (insbesondere bereits als solcher fertiggestellten) Untergrund (Substrat), insbesondere Mauerwerk oder Beton, ggf. auch in einem rissigen Substrat, wie rissigem Beton, vorhanden und von mindestens von einer Seite her zugänglich ist, beispielsweise ein Bohrloch, oder ferner ein beim Mörteln mit anorganischen Mörtel- oder Putzmassen (wie mit Zement oder Gips) ausgesparter Bereich oder dergleichen.

In einer besonderen und vorteilhaften Ausführungsform der Erfindung sind die härtbaren Komponenten und die zugehörigen Härter (Härterkomponenten) voneinander getrennt in einem Zwei- oder Mehrkomponentensystem aufbewahrt, bevor sie am gewünschten Ort (z.B. bei oder in einem Loch oder Spalt, wie Bohrloch) miteinander vermischt werden.

Die erfindungsgemäßen härtbaren Massen und insbesondere Befestigungskunstmörtelsysteme sind dann als Mehr-Komponentensysteme (z.B. Mehrkomponentenkit) vorgesehen und werden auch als solche verwendet.

Unter einem Mehrkomponentenkit ist insbesondere ein Zwei- oder (ferner) Mehrkomponentenkit (vorzugsweise ein Zweikomponentenkit) mit einer Komponente (A), welche entweder ein oder mehrere durch Polymerisation härtbare (= nach Zugabe eines Härters härtende) Reaktiv-Kunstharze oder ein oder mehrere Reaktiv-Kunstharze auf Basis radikalisch härtbarer (olefinische Bindungen aufweisender) Reaktionskunstharze, wie oben und unten beschrieben, beinhaltet, und einer Komponente B, die den jeweils zugehörigen Härter, wie oben und nachfolgend definiert, beinhaltet, wobei weitere Zusätze in einer oder beider der Komponenten vorgesehen sein können, vorzugsweise eine Zwei- oder ferner Mehrkammervorrichtung, zu verstehen, worin die miteinander reaktionsfähigen Komponenten (A) und (B) und ggf. weitere separate Komponenten so enthalten sind, dass ihre Bestandteile während der Lagerung nicht (insbesondere nicht unter Aushärtung) miteinander reagieren können, vorzugsweise so, dass ihre Bestandteile vor der Anwendung nicht miteinander in Berührung kommen, das es jedoch ermöglicht, die Komponenten (A) und (B) und gegebenenfalls weitere Komponenten zur Befestigung an der gewünschten Stelle, beispielsweise direkt vor oder in einem Loch, so zu vermischen und erforderlichenfalls einzubringen, dass dort die Härtungsreaktion stattfinden kann. Auch geeignet sind Patronen, beispielsweise aus Kunststoff, Keramik oder insbesondere Glas, in denen die Komponenten durch (beispielsweise bei Eintreiben eines Verankerungselements in ein Loch oder einen Spalt, wie ein Bohrloch) zerstörbare Abgrenzungswandungen oder integrierte separate zerstörbare Behältnisse voneinander getrennt angeordnet sind, beispielsweise als ineinander verschachtelte Patronen, wie Ampullen; sowie insbesondere Mehr- oder insbesondere Zweikomponenten¬kar¬tuschen (die ebenfalls besonders bevorzugt sind), in deren Kammern die mehreren oder vorzugsweise zwei Komponenten (insbesondere (A) und (B)) des erfindungsgemäßen Befestigungskunstmörtelsystems mit oben und nachstehend genannten Zusammensetzungen zur Aufbewahrung vor der Nutzung enthalten sind, wobei vorzugsweise auch ein Statikmischer zum entsprechenden Kit gehört.

Die erfindungsgemäßen olefinischen Siloxanoligomere sind dabei vorzugsweise in Komponente (A) vorgesehen.

In einer besonderen Ausführungsform der Erfindung sind das oder die radikalisch härtbaren ungesättigten Reaktionskunstharze und das oder die erfindungsgemäß verwendbaren oligomeren Siloxane in einer Komponente A, der Härter in einer Komponente B eines ZweiKomponentensystems beinhaltet.

Insbesondere handelt es sich um Zwei-Komponentensysteme, in denen das Gewichtsverhältnis von Komponente A zu Komponente B bei 99 : 1 bis 1 : 99, bei 99 : 1 bis 50 : 50, bei 99 : 1 bis 60 : 40 oder bei 99 : 1 bis 70 : 30 liegt.

Die erfindungsgemäßen härtbaren Massen bzw. insbesondere Befestigungskunstmörtelsysteme (vorzugsweise Befestigungskunstmörtelkits)) können folglich vorzugsweise als Zwei- oder Mehr-Komponentensysteme (Mehrkomponentenkit) vorgesehen sein und auch verwendet werden. Zweikomponentige Systeme können auch solche sein, die eine Komponente z.B. in verkapselter Form in der anderen Komponente beinhalten.

Die Verwendung einer erfindungsgemäßen härtbaren Masse bzw. eines erfindungsgemäßen Befestigungskunstmörtelsystems am gewünschten Einsatzort erfolgt durch Mischen der zugehörigen (vor Mischung reaktionshemmend separierten) Komponenten, insbesondere nahe bei und/oder direkt vor einem Loch oder (beispielsweise insbesondere bei Verwendung von Kartuschen mit Statikmischern) direkt vor und/oder (insbesondere beim Zerstören entsprechender Patronen oder Ampullen) innerhalb eines Loches oder Spaltes, z.B. einem Bohrloch.

Unter "Einmörteln" ist insbesondere eine (stoff- und/oder formschlüssige) Befestigung von Verankerungsmitteln aus Metall (z.B. Hinterschneidanker, Gewindestangen, Schrauben, Bohranker, Bolzen) oder ferner aus einem anderen Material, wie Kunststoff oder Holz, in festen (vorzugsweise bereits als solche fertiggestellten) Substraten, wie Beton oder Mauerwerk, insbesondere, soweit sie Bestandteile von künstlich errichteten Bauwerken sind, vor allem Mauerwerk, Decken, Wände, Böden, Platten, Pfeilern oder dergleichen (z.B. aus Beton, Naturstein, Mauerwerk aus Vollsteinen oder Lochsteinen, ferner Kunststoff oder Holz), insbesondere in Löchern, wie Bohrlöchern, zu verstehen. Mittels dieser Verankerungsmittel können dann beispielsweise Geländer, Abdeckungselemente, wie Platten, Fassadenelemente oder andere Bauelemente befestigt werden.

Wo von "Gemischen von zwei oder mehr davon" die Rede ist, beinhaltet dies insbesondere Gemische von mindesten einem der genannten Bestandteile, die als bevorzugt hervorgehoben sind, mit ein oder mehreren anderen, insbesondere ein oder mehreren ebenfalls als bevorzugt gekennzeichneten Bestandteilen.

"Als solche fertiggestellt" bedeutet insbesondere, dass die Substrate bis auf mögliche Oberflächenmodifikationen (wie Beschichtung, z.B. Verputzen oder Lackieren) oder dergleichen bereits fertiggestellt (z.B. als Bausteine oder Mauern) und nicht erst gleichzeitig mit dem Verklebungsmittel fertiggestellt werden oder aus diesem bestehen. Mit anderen Worten: Das Verklebungsmittel ist dann nicht selbst bereits fertiggestelltes Substrat.

Die Einbringung des oder der Verankerungsmittel(s) erfolgt vorzugsweise bereits kurze Zeit, vorzugsweise 30 Minuten oder weniger, nach dem Mischen der Komponenten des erfindungsgemäßen Befestigungsmörtels. Zur Erläuterung: Mit der Mischung und Einbringung der Komponenten auf oder in die gewünschten Stellen, an denen Verankerungsmittel befestigt werden sollen, beginnen mehrere, im Wesentlichen parallel und/oder nur mit geringer zeitlicher Versetzung ablaufende, zur Aushärtung führende Reaktionen.

Spezifische Ausführungsformen der Erfindung betreffen auch die in den Ansprüchen und der Zusammenfassung aufgeführten Varianten - die Ansprüche und die Zusammenfassung werden hier daher durch Bezugnahme aufgenommen.

Die erfindungsgemäß verwendbaren oligomeren Siloxane können nach oder in Analogie zu an sich bekannten Verfahren hergestellt werden.

Die Synthese der Siloxanoligomere erfolgt beispielsweise analog den Vorschriften in der DE 10 2011 086 862 A1, beispielsweise durch Umsetzung einer Verbindung oder mehrerer Verbindungen der Formel II

$$(R^1O)(R^1O)_{\{3-(a+e)\}}(R^2)_aSi(A)_e \qquad (II)$$

worin $R^1$, $R^2$, a, A und e wie oben für Verbindungen der Formel I definiert sind,
mit Verbindungen der Formel III,

$$Si(B)_e(R^4)_d(OR^3)_{\{3-(d+e\}}OR^3 \qquad (III)$$

worin $R^3$, $R^4$, d, B und e wie oben für Verbindungen der Formel I definiert sind,
(wobei die Verbindungen der Formeln II und III identisch oder unterschiedlich voneinander sein können)
und gewünschtenfalls (wenn c in Formel I gleich 1 oder größer sein soll) mit Verbindungen der Formel IV

$$Si(Y^*)_4 \qquad (IV)$$

worin Y* für $OR^5$ und/oder $R^5$ steht, worin $R^5$ wie oben für Verbindungen der Formel I definiert ist,
mit Wasser in einem definierten molaren Verhältnis von Wasser zu Alkoxygruppen der Akoxysilane derart, dass - wie in Formel I dargestellt - hydrolysierbare Alkoxygruppen (beispielsweise $R^1O$ und/oder $R^3O$) übrig bleiben.

Dabei kann, sofern keine Verbindung der Formel IV zugesetzt wird, die allgemeine Menge des benötigten Wassers zur Einstellung einer gewünschten Absättigung nach folgender Formel berechnet werden:

$$n\,(\text{Wasser}) = n\,(\text{Moleküle der Formel II}) \times (4-(a+e)) + n\,(\text{Moleküle der Formel III}) \times (4-(d+e)) \times \text{gewünschte Absättigung in } \% / 100 \times 0{,}5.$$

(n entspricht jeweils der molaren Menge in Mol, die 0,5 am Ende bedeutet, dass nur halb so viele Mole Wasser zugesetzt werden müssen wie Mole hydrolysierbare (z.B. Alkoxy-) Gruppen der Edukte der Formel II und III, da nach der Hydrolyse von einer hydrolysierbaren bzw. Alkoxygruppe der Verbindung der Formel II oder der Formel III pro 1 Mol davon 1 Mol Wasser verbraucht und bei der Kondensation der Silanolgruppen (hydrolysierte Alkoxygruppe) je zwei Mol Silanolgruppen der Formel II und/oder III dann wieder 1 Mol Wasser abgespalten wird).

Beispielhaft kann wie folgt vorgegangen werden: In einem Reaktionskolben werden das oder die Silane der Formeln II, III und ggf. IV vorgelegt und anschließend Wasser, welches vorher mit einem Katalysator und einem Lösemittel vermischt wurde, bei Raumtemperatur und Normaldruck zudosiert. Nach vollständiger Zugabe der Lösung (Wasser/Katalysator/Lösemittel) wird das Gemisch zum Sieden erhitzt und ungefähr 4 - 6 Stunden unter leichtem Rückfluss gehalten. Anschließend wird der größte Teil des Lösemittels und des Katalysators unter Normaldruck abdestilliert. Danach werden unter Anlegen von Vakuum bei bis zu 100 mbar die Reste an Lösemittel und Katalysator entfernt. Der erhaltene Sumpf ist das Siloxanoligomer.

Die auf diese Weise erhältlichen bzw. erhaltenen Siloxanoligomere können dann zur Herstellung erfindungsgemäßer Befestigungskunstmörtelsysteme als Bestandteil einer oder mehrerer Komponenten hinzugefügt werden. Die Herstellung der erfindungsgemäßen Befestigungskunstmörtelsysteme beinhaltet also vorzugsweise die Verwendung (Zufügen) der erhältlichen bzw. erhaltenen Siloxanoligomere als Komponentenbestandteil, insbesondere für Komponente A.

Alternativ können sie während der Lagerung der verpackten erfindungsgemäßen Befestigungskunstmörtelsysteme und/oder während dem Mischen der Bestandteile zur Herstellung einer Komponente, z.B. der Komponente A der erfindungsgemäßen Befestigungskunstmörtelsysteme *in situ* bei Gegenwart von Wasser (beispielsweise einer vorbestimmten Menge in einer die Ausgangssilane beinhaltenden Komponente) hergestellt werden.

Bei den (Siloxan-)Strukturelementen der Formel (I) handelt es sich vorzugsweise um solche, die aus folgenden Edukten herstellbar sind: 3-Methacryloxypropyltri(m)ethoxysilan, Methacryloxymethyl-methyldi(m)ethoxysilan, Methacryloxymethyltri(m)ethoxysilan, 3-Methacryloxypropyltriacetoxysilan.

Als bevorzugte Ausgangsstoffe der Formel IV sind folgende zu nennen:

Sämtliche Silane, die in dem Siloxanoligomer zur Ausbildung von D-, T- und Q-Struktureinheiten führen. Zur genaueren Nomenklatur der Benennung solcher Siloxanstrukturen sei auf das "Römpp Chemielexikon" - Stichwort: Silicone - hingewiesen.

Die nachfolgenden Beispiele dienen der Illustration der Erfindung, ohne ihren Umfang einzuschränken.

<u>Beispiel 1: Herstellung eines 3-Methacryloxypropylsiloxanoliaomeren mit 40 % Absättigung der Alkoxygruppen</u>

150,00 g 3-Methacryloxypropyltrimethoxysilan (Dynasilan MEMO, Evonik Industries AG, Hanau, Deutschland) wurden zusammen mit 1,50 g Stabilisator (TEMPOL 1 %ig in BDDMA ~ 100 ppm TEMPOL) in einem Reaktionskolben vorgelegt. 60,00 g Methanol (Lösemittel) wurden mit 6,49 g Wasser und 1,50 g Triethylamin (Katalysator) gemischt und in einen Tropftrichter überführt. Bei Raumtemperatur und Normaldruck wurde das Gemisch aus dem Tropftrichter langsam unter Rühren zu dem 3-Methacryloxypropyltrimethoxysilan zugetropft. Nach beendeter Zugabe wurde das Ölbad auf 80 - 100 °C erhitzt, so dass das Methanol unter Rückfluss siedete. Nach 4 - 6 h wurde das Methanol weitestgehend abdestilliert. Danach wurde unter Anlegen von Vakuum bei langsam fallenden Druck auf bis zu 100 mbar die Reste an Methanol und Triethylamin entfernt. Nach Erreichen der 100 mbar wurde dieser Druck noch 15 Minuten gehalten. Der erhaltene Sumpf ist ein 3-Methacryloxypropylsiloxanoligomer mit mindestens noch 60 % hydrolisierbaren Restmethoxygruppen.

Gesamtrezeptur:

| **Bezeichnung** | **Einwaage [g]** |
|---|---|
| MEMO | 150,00 |
| TEMPOL 1 %ig in BDDMA | 1,50 |
| Wasser | 6,49 |
| Triethylamin | 1,50 |
| Methanol* | 60,00 |
| *Wassergehalt: 0,05%<br>TEMPOL: 4-Hydroxy-2,2,6,6-tetramethylpiperidine-1-oxyl<br>BDDMA: 1,4-Butandioldimethacrylat | |

Das nach Beispiel 1 hergestellte Siloxanoligomer weist einen mittleren Polymerisationsgrad von 2,5 auf (vereinfachte Rechnung; dient lediglich zur Veranschaulichung):

$$n\ (MEMO) / [n\ (MEMO) - n\ (Wasser)] = 0{,}604\ mol / [0{,}604\ mol - 0{,}362\ mol] = 2{,}50$$

$$\text{mit } n\ (Wasser) = n\ (MEMO) \times 3 \times \text{gewünschte Absättigung in } \% / 100 \times 0{,}5 = 0{,}362\ Mol.$$

(n gibt die jeweilige Molmenge in Mol an; die Zahl 3 steht hier für die Mole Alkoxygruppen je Mol MEMO)

Nachfolgend wird eine Berechnung des VOC-Gehaltes beispielhaft an der Zusammensetzung aus Beispiel 1 im Vergleich zu einer entsprechenden Zusammensetzung mit Silanmonomer erläutert:

Fall a: Einsatz monomeres MEMO ohne Oligomerisierung des Silans

In Beispiel 1 werden 150,00 g MEMO eingesetzt:

| Bezeichnung | m [g] | M [g/mol] | n [mol] |
|---|---|---|---|
| MEMO | 150,00 | 248,40 | 0,604 |
| Methoxy | | | 1,812 |
| $MeOH_{MEMO}$ | 58,04 | 32,00 | 1,812 |

Dementsprechend errechnet sich der bei Hydrolyse erhältliche VOC-Gehalt nach der folgenden Formel (mit m = Gewichtsmasse):

$$m\ (MeOH_{MEMO}) / m\ (MEMO) \times 100 = \%\ VOC$$

Bei Einsatz von monomerem MEMO beträgt der freisetzbare VOC- Gehalt (Monomer): 38,70 % ~ **39 %** (gerundet)

Fall b: Einsatz von oligomerisiertem MEMO gemäß Bsp. 1

In Beispiel 1 werden 150,00 g MEMO mit 6,52 g Wasser oligomerisiert:

| Bezeichnung | m [g] | M [g/mol] | n [mol] |
|---|---|---|---|
| MEMO | 150,00 | 248,40 | 0,604 |
| Wasser | 6,52 | 18,00 | 0,362 |
| hydrolysiertes Methoxy | | | 0,725 |
| $MeOH_{OUT}$* | 23,22 | 32,00 | 0,725 |
| *$MeOH_{OUT}$: durch Hydrolyse entnommenes Methanol | | | |

Daraus ergibt sich:

In Oligomer gebundenes Methanol ($m(MeOH_{Oligomer})$):

$$m\ (MeOH_{Oligomer}) = m\ (MeOH_{MEMO}) - m\ (MeOH_{OUT}) = 34{,}83\ g$$

Masse $m\ (Oligomer) = m\ (MEMO) - m\ (MeOH_{OUT}) + m\ (Wasser) = 133{,}30\ g$

Dementsprechend errechnet sich der VOC-Gehalt (Oligomer):

$$m\ (MeOH_{Oligomer}) / m\ (Oligomer) \times 100 = 26{,}13\ \% \sim \mathbf{26\ \%}\ (gerundet)$$

Dies entspricht einer VOC-Reduktion gegenüber rein monomeren Silanen von:

[VOC-Gehalt (Monomer) – VOC-Gehalt (Oligomer)] / VOC-Gehalt (Monomer) x 100 = **32,49 %.**

Beispiel 2: Vergleichsbeispiel (ohne erfindungsgemäßen Siloxan-Zusatz):

Als Vergleichsbeispiel wird ein zweikomponentiges Befestigungskunstmörtelsystem mit der Bezeichnung FIS V 360 S (fischerwerke GmbH & Co. KG, Waldachtal, Deutschland), das folgende Zusammensetzung hat, verwendet:

Komponente (A): Vinylesterharz (ethoxyliertes Bisphenol-A-dimethacrylat), Hydroxypropylmethacrylat, weitere Methacrylsäureester, phenolische Inhibitoren, aminische Beschleuniger, Thixotropiermittel, Portlandzement, Quarzsande, Additive (einschließlich Farbstoffe).

Komponente (B): Dibenzoylperoxid, Wasser, Verdickungsmittel, Füllstoffe (Quarzsand), Additive (einschließlich Farbstoffe).

Die Komponenten werden mit einer handelsüblichen 2-Kammer-Kartusche mit Statikmischer analog den oben für unter Verwendung der Leitlinie von der "European Organisation for Technical Approvals" (EOTA) (2001): ETAG N°001 Ausgabe November 2006, Leitlinie für die europäische technische Zulassung für Metalldübel zur Verankerung im Beton, Teil 5: Verbunddübel, Februar 2008, unter 5.1.2.1 (b) beschriebenen Bedingungen einem Adhäsionsversagenstest unterzogen und der Mittelwert der Adhäsionsversagenslast aus 5 Versuchen für M12 Bolzen bei einer Verankerungstiefe von 95 mm ermittelt. Dieser beträgt 75 kN.

Beispiel 3: Befestigungskunstmörtelsystem mit erfindungsgemäßem Siloxan-Zusatz

Bei der Herstellung von Komponente (A) werden, abweichend von Beispiel 2, das Hydroxypropylmethacrylat und die weiteren Methacrylsäureester durch 5 % des Siloxanoligomers aus Beispiel 1 ersetzt. Alle weiteren Bestandteile und Komponenten werden wie in Beispiel 2 genannt verwendet. Bei den wie oben beschrieben durchgeführten Tests zur Ermittlung der Adhäsionsversagenslast wird ein Wert von 81 kN erreicht.

Beispiel 4: Befestigungskunstmörtelsystem in Patronenform mit erfindungsgemäßem Siloxan-Zusatz

Es werden fischer RM Patronen hergestellt, wobei das übliche Harz durch eine kennzeichnungsfreie Formulierung aus 56 % eines Vinylesterharzes, 42 % eines Siloxanoligomeren nach Beispiel 1, 1,8 % eines Aminbeschleunigers und 0,2 % einer Inhibitorenmischung (t-BBC, TEMPOL) ersetzt wird. Bei den wie oben beschrieben durchgeführten Tests zur Ermittlung der Adhäsionsversagenslast wird bei einer Verankerungstiefe von 110 mm ein Wert von **98** kN erreicht.

Beispiel 5: Befestigungskunstmörtelsystem mit erfindungsgemäßen Mercaptosiloxanoligomeren als Bestandteil b eines radikalbildenden Härtersystems

Um die Eignung eines radikalbildenden Härtersystems auf Basis eines Mercaptosiloxanoligomeren in Kombination mit einem Metallsalz - abweichend von der Patentanmeldung DE 10 2013 114 061.0 vom 16.12.2013, in der beispielsweise monomere Mercaptosilane verwendet werden - aufzuzeigen, wird folgende Rezeptur einem Auszugsversuch gemäß ETAG 001 Teil 5 (wie in Beispiel 2 beschrieben) unterzogen:

| Bezeichnung | m [g] | Gew.-% |
|---|---|---|
| Methacrylatharz | 23,50 | 31,33 |
| Mercaptosiloxan | 0,31 | 0,42 |
| Mn 6 | 1,19 | 1,58 |
| Sand | 50,00 | 66,67 |

Verwendete Abkürzungen:

| | |
|---|---|
| Methacrylatharz: | Mischung aus ethoxyliertem Bisphenol-A-dimethacrylat, Hydroxypropylmethacrylat, weitere Methacrylsäureester und aminische Beschleuniger |
| Mn 6: | Octa-Soligen Manganese 6: Mangansalze (Octoate) der 2-Ethylhexansäure und deren Isomeren (OMG Borchers) |
| MTMO: | Mercaptopropyltrimethoxysilan |

Das Mercaptosiloxanoligomer wird nach der in Beispiel 1 beschriebenen Synthesevorschrift unter Verwendung von MTMO hergestellt. Die Absättigung der Alkoxygruppen beträgt 50 %.

Die ermittelte Verbundspannung beträgt 17,5 $N/mm^2$ und belegt hiermit deutlich die Eignung eines radikalbildenden Härtersystems auf Basis eines Mercaptosiloxanoligomeren in Kombination mit einem Metallsalz zur radikalischen Härtung von ungesättigten Reaktionskunstharzen.

## Patentansprüche

1. Härtbare Masse beinhaltend ein oder mehrere härtende Reaktivharze auf Basis radikalisch härtbarer Reaktionskunstharze und ein oder mehrere mindestens eine Si-gebundene hydrolysierbare Gruppe und mindestens einen nicht hydrolysierbaren olefinischen Rest beinhaltende oligomere Siloxane und räumlich getrennt einen Härter.

2. Härtbare Masse nach Anspruch 1 in Form eines Befestigungskunstmörtelsystems zum Einmörteln von Verankerungsmitteln in Löcher oder Spalten.

3. Härtbare Masse nach Anspruch 1 oder Befestigungskunstmörtelsystem nach Anspruch 2, **dadurch gekennzeichnet, dass** es sich bei den oligomeren Siloxanen um mit olefinischen Resten funktionalisierte Siloxanoligomere, die durchschnittlich je Molekül mindestens mehr als einen olefinischen Rest sowie mindestens eine, vorzugsweise mehr als eine hydrolysierbare, an Silicium gebundene Gruppen aufweisen.

4. Härtbare Masse oder Befestigungskunstmörtelsystem nach einem der Ansprüche 1 bis 3, **dadurch gekennzeichnet, dass** die Siloxanoligomere Si-O-vernetzte Strukturelemente aufweisen, die mindestens eine Struktur ausgewählt aus kettenförmigen, cyclischen, vernetzten und gegebenenfalls raumvernetzten Strukturen ausbilden.

5. Härtbare Masse oder Befestigungskunstmörtelsystem nach einem der Ansprüche 1 bis 4, **dadurch gekennzeichnet, dass** das oder die Siloxanoligomere mindestens eine Struktur in idealisierter Form der allgemeinen Formel (I) beinhalten,

$$(R^1O)[(R^1O)_{\{2-(a+e)\}}(R^2)_aSi(A)_eO]_b\text{-}[Si(Y)_2O]_c\text{-}[Si(B)_e(R^4)_d(OR^3)_{\{2-(d+e\}}O]_fR^3 \qquad (I)$$

wobei die Strukturelemente sich von Alkoxysilanen ableiten und
A und B jeweils unabhängig voneinander einen olefinischen Rest bedeuten;
Y für $OR^5$ und/oder $R^5$ steht oder in vernetzten und gegebenenfalls raumvernetzten Strukturen unabhängig voneinander $OR^5$, $R^5$ oder $O_{0,5}$ bedeutet, vorzugsweise ist Y gleich $OR^5$;
die Reste $R^1$, $R^2$, $R^3$ $R^4$ und $R^5$ jeweils für sich und untereinander unabhängig voneinander, einen unsubstituierten oder substituierten - gegebenenfalls Heteroatome aufweisenden - linearen, verzweigten oder cyclischen Alkylrest mit 1 bis 20 Kohlenstoffatomen bedeuten;
und a, b, c, d, e und f, bezogen auf eine Struktureinheit, unabhängig voneinander ganze Zahlen bedeuten, wobei
a gleich unabhängig voneinander 0 oder 1;
b gleich 1 oder größer;
c gleich 0 oder größer;
d gleich unabhängig voneinander 0 oder 1;
e gleich unabhängig voneinander 1 oder 2;
und f gleich 0 oder größer ist, vorzugsweise gleich 1 oder größer;
mit der Maßgabe, dass b + c + f 2 oder größer ist.

6. Härtbare Masse oder Befestigungskunstmörtelsystem nach einem der Ansprüche 1 bis 5, **dadurch gekennzeichnet,**

**dass** die oligomeren Siloxane ein oder mehrere Verbindungen mit mindestens einer Struktur in idealisierter Form der allgemeinen Formel (IA),

$$(R^1O)[(R^1O)_{(2-(a+e)}(R^2)_aSi(A)_eO]_b\text{-}R^1 \qquad (IA)$$

wobei $R^1$ je Molekül unterschiedlich oder identisch sein können ;
und wobei auch Mischungen von zwei oder mehr Verbindungen der Formel IA mit unterschiedlichen Resten $R^1$ möglich sind;
worin $R^1$, $R^2$ und e wie in Anspruch 5 für Strukturen der Formel I definiert sind und im Mittel b größer oder gleich 2,000 ist.

7. Härtbare Masse oder Befestigungskunstmörtelsystem nach einem der Ansprüche 1 bis 6, **dadurch gekennzeichnet, dass** es sich um ein Mehr-, insbesondere Zwei-Komponenten-System handelt.

8. Härtbare Masse oder Befestigungskunstmörtelsystem nach einem der Ansprüche 1 bis 7, **dadurch gekennzeichnet, dass** es sich bei dem oligomeren Siloxan um ein solches handelt, dessen nicht hydrolysierbarer olefinischer Rest ausgewählt ist aus einer linearen, ein- oder mehrfach verzweigten, oder zyklischen Gruppe mit 2 bis 20, insbesondere 2 bis 10 Kohlenstoffatomen und mit mindestens einer isolierten Doppelbindung, vorzugsweise aus mindestens einem Acryloyloxy-alkylrest und/oder mindestens einem Methacryloyloxy-alkylrest, insbesondere mit jeweils bis zu insgesamt zehn Kohlenstoffatomen; wobei das oligomere Siloxan insbesondere eine Struktur nach Anspruch 5 der Formel I beinhaltet, wobei es sich bei den Resten A und B in Formel I unabhängig voneinander um einen (Meth)acryloyloxy-$C_1$-$C_7$-alkylrest, insbesondere 3-(Meth)acryloyloxypropylrest, handelt.

9. Härtbare Masse oder Befestigungskunstmörtelsystem nach einem der Ansprüche 1 bis 8, **dadurch gekennzeichnet, dass** das oder die härtenden Reaktivharze auf Basis radikalisch härtbarer Reaktionskunstharze ausgewählt sind aus der Gruppe, die aus (Meth)Acrylat-oder (Meth)Acrylamid-Monomeren, insbesondere (Meth)Acrylate wie Mono-, Di-, Tri- oder Poly (meth)acrylate einschließlich Hydroxypropyl(meth)acrylat, Hydroxyethyl(meth)acrylat, Ethylenglykoldi(meth)acrylat, Butandioldi(meth)acrylat, Hexandioldimethacrylat oder, vorzugsweise jeweils propoxyliertem oder insbesondere ethoxyliertem, aromatischem Diol-, wie Bisphenol-A-, Bisphenol-F- oder Novolak-(insbesondere di-) (meth)acrylat), Epoxy(meth)acrylate, insbesondere in Form insbesondere von Umsetzungsprodukten von Di- oder Polyepoxiden, z.B. Bisphenol-A-, Bisphenol-F- oder Novolak-di- und/ oder-polyglycidylethern, mit ungesättigten Carbonsäuren, z.B. $C_2$-$C_7$-Alkencarbonsäuren, wie insbesondere (Meth)acrylsäure), Urethan- oder Harnstoff(meth)acrylaten, und/oder ungesättigten Polyesterharzen, oder dergleichen; oder Gemischen von zwei oder mehr dieser härtbaren ungesättigten organischen Komponenten, besteht.

10. Härtbare Masse oder Befestigungskunstmörtelsystem nach einem der Ansprüche 1 bis 9, **dadurch gekennzeichnet, dass** als Härter ein solcher verwendet wird, der ein Peroxid als eigentlichen Initiator beinhaltet, insbesondere ausgewählt aus der Gruppe bestehend aus organischen Peroxiden, wie Diacylperoxiden, z.B. Dibenzoylperoxid, Ketonperoxide, wie Methylethylketonperoxid oder Cyclohexanonperoxid, oder Alkylperestern, wie tert-Butylperbenzoat, und anorganischen Peroxiden, wie Persulfaten oder Perboraten, sowie Mischungen davon.

11. Härtbare Masse oder Befestigungskunstmörtelsystem nach einem der Ansprüche 1 bis 9, **dadurch gekennzeichnet, dass** als Härter ein Härtersystem vewendet werden, welches die Bestandteile:

a) mindestens einen Aktivator in Form eines Metallsalzes
b) als Radikalkettenstarter mindestens eine Thiol- und/oder Thiolester-Gruppen beinhaltende Verbindung,

beinhaltet.

12. Verfahren zur Herstellung eines Befestigungskunstmörtelsystems nach einem der Ansprüche 2 bis 11, **dadurch gekennzeichnet, dass** es den Schritt der Herstellung der oligomeren Siloxane durch Umsetzung einer Verbindung oder mehrerer Verbindungen der Formel II

$$(R^1O)(R^1O)_{\{3-(a+e)\}}(R^2)_aSi(A)_e \qquad (II)$$

worin $R^1$, $R^2$, a und e wie oben für Verbindungen der Formel I definiert sind,
mit Verbindungen der Formel III,

$$Si(B)_e(R^4)_d(OR^3)_{\{3-(d+e)\}}OR^3 \qquad (III)$$

worin $R^3$, $R^4$, d und e wie in Anspruch 5 für Verbindungen der Formel I definiert sind, wobei die Verbindungen der Formeln II und III identisch oder unterschiedlich voneinander sein können und gewünschtenfalls (wenn c in Formel I gleich 1 oder größer sein soll) mit Verbindungen der Formel IV

$$Si(Y^*)_4 \qquad (IV)$$

worin Y* für $OR^5$ und/oder $R^5$ steht, worin $R^5$ wie oben für Verbindungen der Formel I definiert ist, mit Wasser in einem definierten molaren Verhältnis von Wasser zu Alkoxygruppen der Akoxysilane derart umfasst, dass - wie in Formel I dargestellt - hydrolisierbare Alkoxygruppen (beispielsweise $R^1O$ und/oder $R^3O$) übrig bleiben.

**13.** Härtbare Masse oder Befestigungskunstmörtelsystem, erhältlich nach dem Verfahren nach Anspruch 12.

**14.** Verwendung einer härtbaren Masse oder eines Befestigungskunstmörtelsystems nach einem der Ansprüche 1 bis 11 oder 13 zum Einmörteln von Verankerungsmitteln in Löcher und Spalten.

**15.** Verfahren oder Methode zum Einmörteln von Verankerungselementen in Löcher oder Spalten, bei denen eine härtbare Masse oder ein Befestigungskunstmörtelsystem nach einem der Ansprüche 1 bis 11 oder 13 zum Einmörteln von Verankerungsmitteln in Löcher und Spalten verwendet wird.

## Claims

**1.** Hardenable composition including one or more hardening reactive resins based on free-radical-hardenable reactive synthetic resins and one or more oligomeric siloxanes including at least one Si-bonded hydrolysable group and at least one non-hydrolysable olefinic radical, and, physically separate therefrom, a hardener.

**2.** Hardenable composition according to claim 1 in the form of a synthetic fixing mortar system for embedding anchoring means in mortar in holes or crevices.

**3.** Hardenable composition according to claim 1 or synthetic fixing mortar system according to claim 2, **characterised in that** the oligomeric siloxanes are siloxane oligomers which are functionalised with olefinic radicals and have on average, for each molecule, at least more than one olefinic radical and at least one, preferably more than one, hydrolysable silicon-bonded group.

**4.** Hardenable composition or synthetic fixing mortar system according to any one of claims 1 to 3, **characterised in that** the siloxane oligomers have Si-O-cross-linked structural elements which form at least one structure selected from chain-like, cyclic, cross-linked and optionally spatially cross-linked structures.

**5.** Hardenable composition or synthetic fixing mortar system according to any one of claims 1 to 4, **characterised in that** the siloxane oligomer or oligomers inciude(s) at least one structure in idealised form of the general formula (I):

$$(R^1O)[(R^1O)_{\{2-(a-e)\}}(R^2)_aSi(A)_eO]_b-[Si(Y)_2O]_c-[Si(B)_e(R^4)_d(OR^3)_{\{2-(d+e\}}O]R^3 \qquad (I)$$

wherein the structural elements are derived from alkoxysilanes and
A and B each independently of the other denote an olefinic radical;
Y represents $OR^5$ and/or $R^5$ or, in cross-linked and optionally spatially cross-linked structures, independently of any other denotes $OR^5$, $R^5$ or $O_{0.5}$, preferably Y is $OR^5$;
the radicals $R^1$, $R^2$, $R^3$, $R^4$ and $R^5$ each on its own and independently of one another, denote an unsubstituted or substituted - optionally hetero-atom-containing - linear, branched or cyclic alkyl radical having from 1 to 20 carbon atoms;
and a, b, c, d, e and f, based on a structural unit, independently of one another denote integers, wherein
a independently of any other is 0 or 1;
b is 1 or more;
c is 0 or more;
d independently of any other is 0 or 1;
e independently of any other is 1 or 2;

and f is 0 or more, preferably 1 or more,
with the proviso that b + c + f is 2 or more.

6. Hardenable composition or synthetic fixing mortar system according to any one of claims 1 to 5, **characterised in that** the oligomeric siloxanes include one or more compounds having at least one structure in idealised form of the general formula (IA):

$$(R^1O)[(R^1O)_{(2-(a+e)}(R^2)_aSi(A)_eO]_b\text{-}R^1 \qquad (IA)$$

wherein $R^1$ for each molecule may be different or identical;
and wherein mixtures of two or more compounds of formula IA having different radicals $R^1$ are also possible;
wherein $R^1$, $R^2$ and e are as defined in claim 5 for structures of formula I and on average b is greater than or equal to 2000.

7. Hardenable composition or synthetic fixing mortar system according to any one of claims 1 to 6, **characterised in that** it is a multi-component, especially two-component, system.

8. Hardenable composition or synthetic fixing mortar system according to any one of claims 1 to 7, **characterised in that** the oligomeric siloxane is a siloxane the non-hydrolysable olefinic radical of which is selected from a linear, singly or multiply branched or cyclic group having from 2 to 20, especially from 2 to 10, carbon atoms and having at least one isolated double bond, preferably from at least one acryloyloxy-alkyl radical and/or at least one methaeryloyloxy-alkyl radical, especially having in each case up to ten carbon atoms in total; wherein the oligomeric siloxane especially includes a structure according to claim 5 of formula I, wherein the radicals A and B in formula I, independently of one another, are a (meth)acryloyloxy-$C_1$-$C_7$alkyl radical, especially 3-(meth)acryloyloxypropyl radical.

9. Hardenable composition or synthetic fixing mortar system according to any one of claims 1 to 8, **characterised in that** the hardening reactive resin or resins based on free-radical-hardenable reactive synthetic resins are selected from the group consisting of (meth)acrylate or (meth)acrylamide monomers, especially (meth)acrylates such as mono-, di-, tri- or poly-(meth)acrylates including hydroxypropyl (meth)acrylate, hydroxyethyl (meth)acrylate, ethylene glycol di(meth)acrylate, butanediol di(meth)acrylate, hexanediol dimethacrylate or, preferably in each case propoxylated or, especially, ethoxylated, aromatic diol-, such as bisphenol-A-, bisphenol-F- or novolak-(especially di-)(meth)acrylate), epoxy(meth)acrylates, especially in the form especially of reaction products of di- or poly-epoxides, for example bisphenol-A-, bisphenol-F- or novolak-di- and/or -poly-glycidyl ethers, with unsaturated carboxylic acids, for example $C_2$-$C_7$alkenecarboxylic acids, such as especially (meth)acrylic acid), urethane- and/or urea-(meth)acrylates, and/or unsaturated polyester resins, or the like; or mixtures of two or more of such hardenable unsaturated organic components.

10. Hardenable composition or synthetic fixing mortar system according to any one of claims 1 to 9, **characterised in that** there is used as hardener a hardener which includes a peroxide as the actual initiator, especially selected from the group consisting of organic peroxides, such as diacyl peroxides, for example dibenzoyl peroxide, ketone peroxides, such as methyl ethyl ketone peroxide or cyclohexanone peroxide, or alkyl peresters, such as tert-butyl perbenzoate, and inorganic peroxides, such as persulfates or perborates, as well as mixtures thereof.

11. Hardenable composition or synthetic fixing mortar system according to any one of claims 1 to 9, **characterised in that** there is used as hardener a hardener system which includes the constituents:

a) at least one activator in the form of a metal salt,
b) as free-radical chain initiator, at least one compound including thiol and/or thiol ester groups.

12. Process for the production of a synthetic fixing mortar system according to any one of claims 2 to 11, **characterised in that** it comprises the step of preparing the oligomeric siloxanes by reacting a compound or a plurality of compounds of formula II

$$(R^1O)(R^1O)_{\{3-(a+e)\}}(R^2)_aSi(A)_c \qquad (II)$$

wherein $R^1$, $R^2$, a and e are as defined above for compounds of formula I,
with compounds of formula III

$$Si(B)_a(R^4)_c(OR^3)_{\{3(d+e\}}OR^3 \qquad (III)$$

wherein $R^3$, $R^4$, d and e are as defined in claim 5 for compounds of formula I, wherein the compounds of formulae II and III may be identical or different from one another,
and if desired (if c in formula I is to be equal to or greater than 1) with compounds of formula IV

$$Si(Y^*)_4 \qquad (IV)$$

wherein Y* represents $OR^5$ and/or $R^5$, wherein $R^5$ is as defined above for compounds of formula I,
with water in a defined molar ratio of water to alkoxy groups of the alkoxysilanes, such that - as shown in formula I - hydrolysable alkoxy groups (for example $R^1O$ and/or $R^3O$) remain.

**13.** Hardenable composition or synthetic fixing mortar system, obtainable by the process according to claim 12.

**14.** Use of a hardenable composition or of a synthetic fixing mortar system according to any one of claims 1 to 11 or 13 for embedding anchoring means in mortar in holes and crevices.

**15.** Process or method for embedding anchoring elements in mortar in holes or crevices, wherein a hardenable composition or a synthetic fixing mortar system according to any one of claims 1 to 11 or 13 is used for embedding anchoring means in mortar in holes and crevices.

**Revendications**

**1.** Masse durcissable contenant une ou plusieurs résines réactives durcissables à base de résines synthétiques réactionnelles durcissables par voie radicalaire et un ou plusieurs siloxanes oligomères contenant au moins un groupe hydrolysable lié par Si et au moins un radical oléfinique non hydrolysable et un durcisseur séparé dans l'espace.

**2.** Masse durcissable selon la revendication 1 sous forme d'un système de mortier synthétique de fixation pour le scellement par un mortier de moyens d'ancrage dans des trous ou des fentes.

**3.** Masse durcissable selon la revendication 1 ou système de mortier synthétique de fixation selon la revendication 2, caractérisé(e) en ce qu'il s'agit, pour les siloxanes oligomères, d'oligomères de siloxane fonctionnalisés par des radicaux oléfiniques, qui présentent en moyenne, par molécule, au moins plus d'un radical oléfinique ainsi qu'au moins un, due préférence plus d'un, groupe hydrolysable, lié au siliciure.

**4.** Masse durcissable ou système de mortier synthétique de fixation selon l'une quelconque des revendications 1 à 3, caractérisé(e) en ce que les oligonères de siloxane présentent des éléments structuraux réticulés par Si-O, qui forment au moins une structure choisie parmi les structures linéaires, cycliques, réticulées et le cas échéant réticulées en trois dimensions.

**5.** Masse durcissable ou système de mortier synthétique de fixation selon l'une quelconque des revendications 1 à 4, caxactérisé(e) en ce que le ou les oligomères de siloxane contiennent, au moins une structure présentant, sous forme idéalisée, la formule générale (I),

$$(R^1O)[(R^1O)_{\{2-(a+e)}(R^2)_aSi(A)_eO]_b-[Si(Y)_2O]_c-[Si(B)_e(R^4)_d(OR^3)_{\{2-(d+e)\}}O]_fR^3 \qquad (I)$$

dans laquelle les éléments structuraux sont dérivés d'alcoxysilanes et
A et B représentent, à chaque fois indépendamment l'un de l'autre, un radical oléfinique ;
Y représente $OR^5$ et/ou $R^5$ ou, dans des structures réticulées et le cas échéant réticulées en trois dimensions, indépendamment, $OR^5$, $R^5$ ou $O_{0,5}$, Y représentant de préférence $OR^5$ ;
les radicaux $R^1$, $R^2$, $R^3$ $R^4$ et $R^5$ représentent, à chaque fois en soi et indépendamment les uns des autres, un radical alkyle non substitué ou substitué - présentant le cas échéant des hétéroatomes - linéaire, ramifié ou cyclique comprenant 1 à 20 atomes de carbone ;
et a, b, c, d, e et f, par rapport à une unité-structurale, signifiient, indépendamment les uns des autres, des nombres entiers,
a valant, indépendamment, 0 ou 1,

b valant 1 ou plus ;
c valant 0 ou plus ;
d valant, indépendamment, 0 ou 1,
e valant, indépendamment, 1 ou 2 ;
et f valant 0 ou plus, de préférence 1 ou plus ;
à condition que b + c + f vaille 2 ou plus.

6. Masse durcissable ou système de mortier synthétique de fixation selon l'une quelconque des revendications 1 à 5, caractérisé(e) en ce que les oligomères de siloxane sont un ou plusieurs composés présentant au moins une structure présentant, sous forme idéalisée, la formule générale (IA),

$$(R^1O)[(R^1O)_{\{2\text{-}a+e)\}}(R^2)_aSi(A)_eO]_b\text{-}R^1 \qquad \text{(IA)}$$

dans laquelle $R^1$, par molécule, peut être identique ou différent ;
des mélanges de deux composés, ou plus, de formule IA avec des radicaux $R^1$ différents étant également possibles ;
dans laquelle, $R^1$, $R^2$ et e sont définis comme dans la revendication 5 pour des structures de formule I et b est en moyenne supérieur ou égal à 2,000.

7. Masse durcissable ou système de mortier synthétique de fixation selon l'une quelconque des revendications 1 à 6, caractérisé(e) en ce qu'il s'agit d'un système à plusieurs composants, en particulier à deux composants.

8. Masse durcissable ou système de mortier synthétique de fixation selon l'une quelconque des revendications 1 à 7, caractérisé(e) en ce qu'il s'agit, pour le siloxane oligomère, d'un siloxane dont le radical oléfinique non hydrolysable est choisi parmi un groupe linéaire, monoramifié ou polyramifié ou cyclique comprenant 2 à 20, en particulier 2 à 10 atomes de carbone et présentant au moins une double liaison isolée, de préférence parmi au moins un radical acryloyloxyalkyle et/ou au moins un radical mëthaCryloyloxyalkyle, présentant en particulier à chaque fois jusqu'à au total dix atomes de carbone ; le siloxane oligomère présentant en particulier une structure selon la revendication 5 de formule I, les radicaux A et B dans la formule I représentant, indépendamment l'un de l'autre, un radical (méth)acryloyloxy-$C_1$-$C_7$-alkyle, en particulier un radical 3-(méth)acryloyloxypropyle.

9. Masse durcissable ou système de mortier synthétique de fixation selon l'une quelconque des revendications 1 à 8, caractérisé(e) en ce que la ou les résines réactives durcissables à base de résines synthétiques réactionnelles durcissables par voie radicalaire sont choisies dans le groupe constitué par des monomères de (méth)acrylate ou de (méth)acrylamide, en particulier les (méth)acrylates tels que les mono(méth)acrylates, les di(méth)acrylates, les tri(méth)acrylates ou les poly(méth)acrylates, y compris le (méth)acrylate d'hydroxypropyle, le (méth)acrylate d'hydroxyéthyle, le di(méth)acrylate d'éthylèneglycol, le di(méth)acrylate de butanediol, le diméthacrylate d'hexanediol ou, de préférence un (méth)acrylate, de préférence à chaque fois propoxylé ou en particulier éthoxylé, aromatique, de diol, tel que de bisphénol-A, de bisphénol-F ou de novolaque (en particulier un diméthacrylate), des époxy(méth)acrylates, en particulier sous forme de produits de transformation de diépoxydes ou de polyépoxydes, par exemple le bisphénol-A-diglycidyléther, le bisphénol-F-diglycidyléther ou le novolaque-diglycidyléther et/ou le bisphénol-A-polyglycidyléther, le bisphénol-F-polyglycidyléther ou le novolaque-polyglycidyléther, avec des acides carboxyliques insaturés, par exemple les acides $C_2$-$C_7$-alcènecarboxyliques, tels qu'en particulier l'acide (méth)acrylique, les uréthane-(méth)acrylates ou les urée-(méth)acrylates et/ou les résines insaturées de polyester ou analogues ; ou des mélanges de deux, ou plus, de ces composants organiques insaturés durcissables.

10. Masse durcissable ou système de mortier synthétique de fixation selon l'une quelconque des revendications 1 à 9, caractérisé(e) en ce qu'on utilise comme durcisseur un durcisseur qui contient un peroxyde en tant qu'initiateur en soi, en particulier choisi dans le groupe constitué par les peroxydes organiques, tels que les peroxydes de diacyle, par exemple le peroxyde de dibenzovle, les peroxydes de cétone, tels que le peroxyde de méthyléthylcétone ou le peroxyde de cyclohexanone, ou les peresters d'alkyle, tels que le perbenzoate de tert-butyle, et les peroxydes inorganiques, tels que les persulfates ou les perborates, ainsi que leurs mélanges.

11. Masse durcissable ou système de mortier synthétique de fixation selon l'une quelconque des revendications 1 à 9, caractérisé(e) en ce qu'on utilise, comme durcisseur, un système durcisseur qui contient les constituants :

a) au moins un activateur sous forme d'un sel métallique
b) comme initiateur de chaînes radicalaires au moins un composé contenant des groupes thiol et/ou thiolester.

**12.** Procédé pour à préparation d'un système de mortier synthétique de fixation selon l'une quelconque des revendications 2 à 11, **caractérisé en ce qu'**il comprend l'étape de préparation des siloxane oligomères par transformation d'un composé ou de plusieurs composés de formule II

$$(R^1O)(R^1O)_{\{3-(a+e)\}}(R^2)_aSi(A)_e \qquad (II)$$

dans laquelle $R^1$, $R^2$, a et e sont définis comme ci-dessus pour les composés de formule I, avec des composés de formule III,

$$Si(B)_e(R^4)_d(OR^3)_{(3-(d+e)\}}(OR)^3 \qquad (III)$$

dans laquelle $R^3$, $R^4$, d et e sont définis comme dans la revendication 5 pour les composés de formule I, les composés des formules II et III pouvait être identiques ou différents l'un de l'autre,
et si souhaité (lorsque c dans la formule I vaut 1 ou plus) avec des composés de formule IV

$$Si(Y^*)_4 \qquad (IV)$$

dans laquelle Y* représente $OR^5$ et/ou $R^5$, $R^5$ étant défini comme ci-dessus pour les composés de formule I, avec de l'eau dans un rapport molaire défini de l'eau aux groupes alcoxy des alcoxysilanes de marnière telle qu'il reste - comme représenté dans la formule I - des groupes alcoxy hydrolysables (par exemple $R^1O$ et/ou $R^3O$).

**13.** Masse durcissable ou système de mortier synthétique de fixation pouvant être obtenu(e) selon le procédé selon la revendication 12.

**14.** Utilisation d'une masse durcissable ou d'un système de mortier synthétique de fixation selon l'une quelconque des revendications 1 à 11 ou 13 pour le scellement par un mortier de moyens d'ancrage dans des trous ou des fentes.

**15.** Procédé ou méthode pour le scellement par un mortier de moyens d'ancrage dans des trous ou des fentes, dans lequel une masse durcissable ou un système de mortier synthétique de fixation selon l'une quelconque des revendications 1 à 11 ou 13 est utilisé pour le scellement par un mortier de moyens d'ancrage dans des trous ou des fentes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011072789 A
- EP 0508183 A1
- EP 0432087 A1
- DE 102014101861
- DE 19956509
- WO 02079341 A
- WO 02079293 A
- DE 102013114061
- DE 102011086862 A1


### In der Beschreibung aufgeführte Nicht-Patentliteratur


- **LEITLINIE.** European Organisation for Technical Approvals. 2001
- **BETON.** Verbunddübel. Februar 2008
- **BETON.** Verbunddübel. Februar 2008, vol. 2
- **LEITLINIEN.** European Organisation for Technical Approvals (EOTA). 2001